# EUROPÄISCHE PATENTSCHRIFT

(11) **EP 1 111 997 B1**
(45) Veröffentlichungstag und Bekanntmachung des Hinweises auf die Patenterteilung: **03.04.2002**
(21) Anmeldenummer: 99953568.5
(22) Anmeldetag: 20.08.1999
(51) Int. Cl.: A21C 3/02

(54) **VERFAHREN, KOMPONENTE UND DEREN ANORDNUNG FÜR DIE TEIGVERARBEITUNG**
METHOD, COMPONENTS AND THE ARRANGEMENT OF SAID COMPONENTS FOR PROCESSING DOUGH
PROCEDE, COMPOSANTS ET LEUR AGENCEMENT POUR LE TRAITEMENT DE PATE

(30) Priorität: 27.08.1998 DE 19839006
(43) Veröffentlichungstag der Anmeldung: 04.07.2001
(73) Patentinhaber: A. FRITSCH GMBH & CO. KG, D-97348 Markt Einersheim (DE)
(72) Erfinder: WEHNER, Hans, Joachim, D-49733 Haren (DE); BERNHARDT, Udo, D-97346 Iphofen (DE); HAUPT, Hans, D-97348 Willanzheim (DE)
(74) Vertreter: Götz, Georg
(86) Internationale Anmeldenummer: DE9902634
(87) Internationale Veröffentlichungsnummer: WO0011958

(56) Entgegenhaltungen:
- EP-A- 0 128 015
- EP-A- 0 239 154
- EP-A- 0 251 138
- EP-A- 0 329 398
- EP-A- 0 826 304
- WO-A-98/21970
- DE-A- 4 445 506
- DE-A- 19 504 499
- DE-U- 29 502 209
- NL-A- 8 304 377
- NL-C- 9 063

## Beschreibung

Die Erfindung betrifft ein Verfahren zur maschinellen Teigverarbeitung, insbesondere zum Formen von Teig, unter Einsatz eines den Teig erfassenden und darauf einwirkenden Bandförderers, der an wenigstens einem Formwiderlager zur Bildung eines Formspalts oder Formkanals für den Teig vorbeigeführt wird. Ferner betrifft die Erfindung eine Komponente für Teigverarbeitungsmaschinen, insbesondere Teigbandformer, die als Mittel zur Durchführung des Verfahrens geeignet ist und einen den Teig erfassenden und darauf einwirkenden Bandförderer aufweist. Weiter betrifft die Erfindung eine Anordnung mit wenigstens einer solchen Teigverarbeitungs-Komponente.

Bekannt ist eine Vorrichtung zur Herstellung von viereckigen Teigstücken (Offenlegungsschrift DE 195 10 724 A1), bei der ein Zuführ-Förderband Teigmaterial zu einer Walzeinrichtung fördert, die hintereinander mehrere Formwalzen mit je einem sich bewegenden Formwiderlager aufweist. Dieses ist jeweils aus einem Transportband gebildet, das über einen Tisch mit Messerkante geführt ist.

Es ist weiter eine Vorrichtung zum Strecken von Brotteig bekannt (EP 0 826 304 A1), bei der die Teigverarbeitungskomponenten mit Mehl bestreut werden, um ein Anhaften des Teigs zu vermeiden. Für die Mehlzuführung wird ein eigenes Förderband eingesetzt, welches zu den unteren Komponenten geführt ist, welche mit gegenüberliegenden oberen Formwiderlagern einen Formspalt bilden. Diese oberen Teigformkomponenten sind mit einem Satellitenkopf-Aggregat mit ovalem Umfang gebildet, der durch ein die bahnförmig umlaufenden Satellitenwalzen umgebendes Förderband gebildet ist. Ein unterer, rein linear verlaufender Abschnitt des Umfangs der Förderband/ Satellitenkopf-Kombination begrenzt den Formspalt, wobei dessen Dicke bzw. Breite konstant gehalten wird. Denn im Bereich des linearen Umfangsabschnitts befinden sich die einzelnen Satellitenwalzen auf einer gemeinsamen, konstant gehaltenen Höhe.

Aus EP-A-0 239 154 ist eine Teig-Walzvorrichtung bekannt, bei der zwischen zwei Walzen ein Formspalt oder Formkanal gebildet ist. Der Abstand der Walzen wird konstant gehalten. Ferner ist dem Formspalt eine Satellitenkopf-Komponente nachgeordnet, die mit einer Mehlstreueinrichtung in Wirkungsverbindung steht.

Aus EP-A-0 329 398 ist ein Verfahren und eine Vorrichtung zum Strecken von Teig bekannt, bei der ein Teigformspalt mit sich dynamisch verändernder Dicke gebildet ist. Der Teigformspalt ist gebildet aus einer Transferwalze und einem gegenüberliegenden Rollenmechanismus. Letzterer besteht aus einer Rolle, die am Ende eines Bewegungsarms drehbar gelagert ist, der gleichsam wie der Zeiger einer Uhr mit der Rolle um eine Achse umläuft.

Aus US-A 5 733 589 ist ein Verfahren und eine Vorrichtung zur Teigverarbeitung ebenfalls mit einem sich in seiner Dicke bzw. Höhe dynamisch verändernden Teigwalzspait bekannt. Dieser wird gebildet aus einer drehbaren Walze mit ortsfester Drehachse und einer gegenüberliegenden Walze mit einer Drehachse, deren Position durch eine Exzentereinrichtung periodisch hin- und her bewegt wird. Für den Teigformspalt wird auch ein Förderband eingesetzt, das allerdings lediglich die Walze mit der ortsfesten Drehachse umgibt. Der Durchmesser dieser Formwalze ist so groß bemessen, daß ihr Umfang mit darauf aufliegendem Förderband den Formspalt über dessen gesamte Länge begrenzt.

Demgegenüber liegt der Erfindung die Aufgabe zugrunde, bei solchen Teigverarbeitungssystemen eine schonende und flexible Teigbehandlung herbeizuführen, wobei eine Anpassung an unterschiedliche Teigarten, insbesondere weiche Teigarten, möglich ist. Ferner soll für eine entsprechende Teigverarbeitungsmaschine eine kompakte Bauweise, eine hohe Wartbarkeit und ein hoher Teigdurchsatz gegeben sein. Insbesondere soll auch die Gefahr des Verklebens und Anhaftens von Teig an Komponenten vermindert sein.

Zur Lösung dieses Aufgabenkomplexes wird bei einem Verfahren mit den eingangs genannten Merkmalen erfindungsgemäß vorgeschlagen, daß für den Bandförderer ein flexibel und reversibel auslenkbares Förderband verwendet wird, und das Förderband im Bereich des Formspalts oder Formkanals mit einem Stellorgan in Richtungen quer und/oder schräg zur Förderrichtung kurzzeitig und/oder periodisch ausgelenkt und die Auslenkung wieder umgekehrt wird. Bei einer Teigverarbeitungskomponente mit den eingangs genannten Merkmalen wird zur Lösung erfindungsgemäß vorgeschlagen, daß der Bandförderer ein flexibel und reversibel auslenkbares Förderband aufweist, mit dem ein Stellorgan verbunden oder gekoppelt ist, das dazu ausgebildet ist, dem Förderband kurzzeitige und/oder periodische Auslenkbewegungen in Richtungen quer und/oder schräg zur Förderrichtung zu erteilen und diese umzukehren. Bei einer Anordnung mit den eingangs genannten Merkmalen wird entsprechend vorgeschlagen, daß die Komponente einem oder mehreren Formwiderlagern gegenüberliegend angeordnet ist, wobei eines oder mehrere Formspalte oder Formkanäle für den Teig gebildet werden. Wegen weiterer vorteilhafter Ausgestaltungen wird auf die rückbezogenen Unteransprüche verwiesen.

Die erfindungsgemäßen Auslenkungen des Förderbandes lassen sich in Amplitude und/oder Periode so einstellen und an die jeweilige Teigart anpassen, daß bestimmte Effekte, wie insbesondere ein Thixotropieeffekt im Teig ausgelöst werden können. Als Stellorgane eignen sich besonders Wälz- oder Gleitkörper, die mit einem beweglichen Gestell in Anlage an das Förderband gehalten und dabei entsprechend der erfindungsgemäßen Auslenkung hin- und herverstellt werden können. Mit besonderem Vorteil wird als Stellorgan ein an sich bekanntes Satellitenkopf-Aggregat mit Satellitenwalzen verwendet, das auf seinem Außenumfang wenigstens einen nichtlinear verlaufenden, vorzugsweise rundlichen Abschnitt aufweist, mit dem es dann gegen das Förderband gedrückt wird. Aufgrund der Abstände der einzelnen Satellitenwalzen voneinander ist gewährleistet, daß das auf den Walzen aufliegende Förderband mit Vertiefungen zwischen den Walzen und Erhöhungen auf den Walzen verläuft, die durch das Abrollen der Walzen erzeugt werden. Dabei kann die Periode und/oder Amplitude der Auslenkung über die Anzahl der Satellitenwalzen des Aggregats, deren Abstände im Aggregat voneindander, der Satellitenbahngeschwindigkeit und/oder der Durchmesser der Satellitenwalzen eingestellt werden. Je größer die Anzahl der Satellitenwalzen und je kleiner deren Abstände voneinander beispielsweise sind, desto größer werden die Auslenkungsfrequenz und kleiner die Auslenkungsamplitude. Umgekehrt führt eine geringere Anzahl an Satellitenwalzen am Förderband verbunden mit einem größeren Satellitenwalzendurchmesser zu erhöhten Amplituden mit geringerer Frequenz. Ferner läßt sich Amplitude und Frequenz leicht über die Geschwindigkeit, mit der die Satellitenwalzen umlaufen, einstellen. Mithin ist eine äußerst flexible Anpassung an Teigarten aufgrund der besonderen Ausbildung der Erfindung mit Satellitenkopf-Aggregaten und diese umfassende Förderbänder gegeben.

Eine platzsparende Bauweise wird noch dadurch gefördert, daß das Stellorgan innerhalb des vom Förderband umgrenzten Bereichs angeordnet ist, der damit funktionell als Bauraum für das Stellorgan ausgenutzt ist. Auf den Teig wird dann mit der Außenseite des Förderbands eingewirkt, und danach kann der bearbeitete Teig leicht weiterbefördert werden.

Im Zusammenhang mit der bereits genannten Ausführung des Stellorgans in Form von Wälzkörpern besteht eine vorteilhafte Ausbildung darin, daß diese im oder am Gestell freilaufend gelagert und zum Abrollen auf dem Förderband, vorzugsweise auf dessen Innenseite, angeordnet sind. Das Förderband hat dabei den Vorteil, daß es Teigpartikel daran hindert, zwischen die einzelnen Wälzkörper zu gelangen. Die Wartbarkeit des Systems wird erhöht. Ein entsprechender Vorteil ergibt sich auch beim Einsatz von (nicht abrollbaren) Gleitkörpern, gedrückt an die Innenseite des Förderbandes.

Nach einer anderen vorteilhaften Ausbildung der Erfindung ist das Förderband der Komponente zur Teigverarbeitung mehrfach umgelenkt bzw. "mehreckig" verlaufend aufgespannnt, wobei wenigstens ein eckenartiger Bereich von einer Antriebs- und/oder Umlenktrommel des Bandförderers und wenigstens ein anderer eckenartiger Bereich vom Stellorgan gebildet ist. Der damit erzielte Vorteil besteht darin, daß die Anwendungsflexibilität und der Einsatzbereich der erfindungsgemäßen Komponente sich für Teigverarbeitungsanordnungen unterschiedlichster Art erhöhen läßt. So können speziell ausgebildete Förderbandabschnitte abgegrenzt und speziellen Teigverarbeitungskomponenten zugeordnet werden. Zudem ist es möglich, Teig-Formspalte oder -kanäle mit je nach Einsatzanforderungen unterschiedlich gestalteten Verläufen zu realisieren.

Im Zusammenhang mit der vorteilhaften Verwendung eines Satellitenkopf-Aggregates als Stellorgan für das Auslenken des Förderbands ist eine Einstellung der Antriebstrommel für das Förderband und des Stellantriebs für das Satellitenwalzen tragende Gestell zweckmäßig, bei der die Förderrichtung des Bandförders und die Umlaufbahnen der Satellitenwalzen im gleichen Richtungs- oder Drehsinn verlaufen. Sind die Geschwindigkeitsbeträge unterschiedlich, ergibt sich für freilaufend gelagerte Wälzkörper auf dem Gestell eine Eigendrehung, worüber sie auf dem Förderband abrollen und dieses dabei von der Grundförderrichtung ablenken können.

Bei der erfindungsgemäßen Anordnung mit einer oder mehreren Teigverarbeitungskomponenten besteht eine vorteilhafte Ausbildung in der Kombination mit einer Mehlstreueinrichtung. Von dieser läßt sich Mehl leicht auf das Förderband und darüber effektiv in den Bereich des Formspalts oder -kanals bringen. Zweckmäßig kann zum anfänglichen Aufbringen des Mehls aus der Mehlstreueinrichtung ein solcher Abschnitt des Förderbands verwendet werden, der zwischen einem Stellorgan und einer davon derart beabstandeten Antriebs-/ oder Umlenktrommel gebildet ist, daß dieser Abschnitt weitgehend ruhiggehalten bzw. in Richtungen quer oder schräg zur Förderrichtung zumindest nicht spürbar ausgelenkt ist.

Als Formwiderlager kommen im Rahmen der erfindungsgemäßen Anordnung grundsätzlich ruhende oder bewegliche Objekte, gegebenenfalls drehbare Walzen insbesondere zum Kalibrieren, Satellitenkopf-Aggregate oder auch eine weitere erfindungsgemäße Teigverarbeitungskomponente in Betracht, die der ersten gegenüberliegt. Den so gebildeten Formspalten oder - kanälen können Zuführ- oder Wegführförderbänder am Ein- bzw. Ausgang zugeordnet sein. Mit besonderem Vorteil sind die Antriebsmittel dieser beweglichen Formwiderlager und der zugeordneten Teigverarbeitungskomponente derart ausgelegt, daß die jeweiligen Bewegungsgeschwindigkeiten voneinander unabhängig einstellbar und regelbar sind. Damit läßt sich nicht nur eine hohe Flexibilität in der Anpassung an verschiedenste Teigsorten, sondern auch eine Erhöhung des Teigdurchsatzes erreichen. Es können besonders große Abwalzgrade realisisert werden, und dem Eingang des Formspalts oder -kanals ausordentlich dikke Teigblöcke zugeführt werden. Zudem läßt sich durch Variation einer oder mehrerer der jeweiligen Geschwindigkeiten die Pulsierfrequenz im Formspalt oder -kanal direkt beeinflussen.

Auf der Basis der allgemeinen erfinderischen Idee mit universell einsetzbaren Teigverarbeitungs-Komponenten lassen sich in der darauf aufgebauten Anordnung mehrere Formwiderlager derart um die Teigverarbeitungs-Komponente plazieren, daß ein gekrümmter, gebogener oder polygoner Teig-Formkanal begrenzt wird. Mit einem solchen variablen Verlauf der Teig-Formkanäle kann unterschiedlichen Raumverhältnissen Rechnung getragen werden. Zudem sind auch besonders weiche Teigsorten leichter verarbeitbar, indem sie mit einem entsprechend geführten Formkanal von oben vertikal nach unten an einer erfindungsgemäßen Komponente vorbei zu einem Wegführförderband geführt werden.

Weitere Einzelheiten, Merkmale, Vorteile und Wirkungen auf der Basis der Erfindung ergeben sich aus der nachfolgenden Beschreibung bevorzugter Ausführungsbeispiele der Erfindung sowie den Zeichnungen. Diese zeigen jeweils schematisch in
- Fig. 1: eine Längsseitenansicht auf eine erfindungsgemäße Anordnung mit einer erfindungsgemäßen Teigverarbeitungs- Komponente
- Fig. 2 und 3: eine jeweils vergrößerte Darstellung des Formspalts mit unterschiedlichen Ausführungen der erfindungsgemäßen Teigverarbeitungs-Komponente
- Fig. 4: ein Diagramm zur Darstellung der Hubhöhe bzw. Amplitude in Abhängigkeit der Walzenanzahl der Teigverarbeitungskomponente gemäß Figuren 1-3
- Fig. 5-9: jeweils in Längsseitenansicht weitere erfindungsgemäße Anordnungen mit unterschiedlichen Ausführungen der Teigverarbeitungs-Komponente nach der Erfindung.

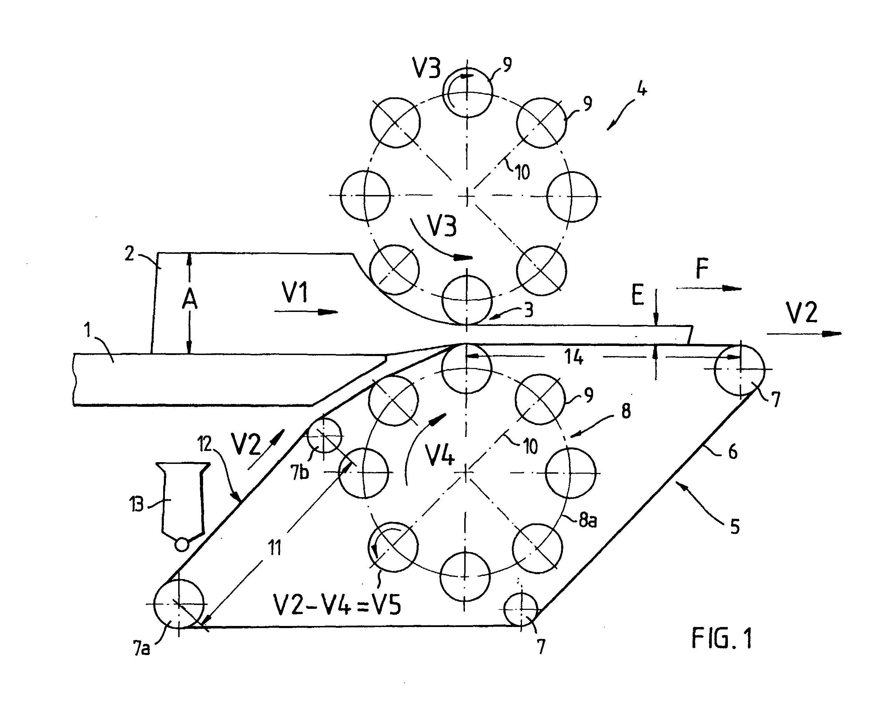

Gemäß Fig.1 wird von einem Zuführ-Förderband 1 ein Teigstrang 2 mit der Anfangsdicke A in einen Teigformspalt 3 gefördert. Dieser ist gebildet aus einem oberen, an sich bekannten Satellitenkopf-Aggregat 4 und einer erfindungsgemäßen Teigverarbeitungs-Komponente 5, die unterhalb des Satellitenkopf-Aggregats 4 angeordnet ist. Die Erstreckung des Teigformspalts 3 quer zur Teig-Förderrichtung F entspricht etwa der Enddicke E, mit der der Teigstrang 2 den Teigformspalt 3 verläßt. Die den Teigformspalt 3 von unten begrenzende Teigverarbeitungskomponente 5 ist mit einem Förderband 6 gebildet, das über Antriebs- und/oder Umlenkrollen 7 parallelogrammartig um ein an der Innenseite des Förderbandes 6 angreifendes Stellorgan 8 geführt ist. Dieses ist im Beispiel gemäß Fig.1 ebenfalls als an sich bekanntes, unteres Satellitenkopf-Aggregat 8a mit Satellitenwalzen 9 ausgeführt. Diese sind auf einem schematisch-gestrichelt angedeuteten Drehgestell 10 frei drehbar gelagert. Letzteres wird von einem (nicht gezeichnetem) Stellantrieb in Rotation gemäß Zeichnung im Uhrzeigersinn versetzt, wobei die Satellitenwalzen 9 auf der Innenseite des Förderbandes 6 abrollen können. Das Stellorgan 8, welches eine der vier Ecken des Förderband-Parallelogrammes bildet, liegt einer Antriebs- und/oder Umlenkrolle 7 diametral gegenüber, welche eine entsprechende Ecke des Parallelogramms definiert. Zwischen einer weiteren Antriebs-/ Umlenkrolle 7a, die sich unmittelbar unterhalb des Zuführ-Förderbandes 1 befindet, und einer unmittelbar nachfolgenden Stabilisierungswalze 7b, die dem Stellorgan vorgeordnet ist, ist aufgrund eines zwischen dieser Walze 7b und der vorausgehenden Umlenkrolle 7a vorherrschenden Abstandes 11 vom Förderband 6 eine zum Teigformspalt 3 hin ansteigende Förderrampe 12 gebildet, auf die das Stellorgan 8 wegen der Dämpfung durch die Sabilisierungswalze 7b nur noch wenig bis gar nicht spürbar einwirkt. Der Förderrampe 12 ist eine Mehlstreueinrichtung 13 zugeordnet, von der aus Mehl auf die Oberfläche der bezüglich Querauslenkungen beruhigten Förderrampe 12 hin zum Teigformspalt 3 geführt wird. Zwischen einer ausgangsseitigen Antriebs-/ Umlenkrolle 7 und dem Stellorgan 8 besteht ein weiterer, so ausreichend bemessener Abstand 14, daß sich ebenfalls ein entsprechender Förderband-Abschnitt ergibt, auf den Stellorganelemente nicht unmittelbar einwirken. Dieser Abschnitt bildet gleichsam einen fördernden "Tisch" zu Zwecken weiterer Bearbeitung am Ausgang des Teigformspalts 3 für den nun auf die Enddicke E abgewalzten Teigstrang 2a.

Mit (nicht gezeichneten) Antriebsmitteln werden dem Zuführ-Förderband 1 die Fördergeschwindigkeit V1, mit den Antriebs-/ Umlenkrollen 7 dem Komponenten-Förderband 6 die Fördergeschwindigkeit V2, mit weiteren Antriebsmitteln dem Drehgestell 10 des oberen Satellitenkopf-Aggregats 4 die Drehgeschwindigkeit V3 und gleichzeitig die entgegengesetzte Eigen-Drehgeschwindigkeit - V3 für die oberen Satellitenwalzen 9 und schließlich mit einem (nicht gezeichneten) Stellantrieb dem Drehgestell 10 des unteren Komponenten-Satellitenkopf-Aggregates 8a die Drehgeschwindigkeit V4 eingeprägt. Die Drehgeschwindigkeit V3 des oberen Satellitenkopf-Aggregats 4 ist entgegen dem Uhrzeigersinn, und die Drehgeschwindigkeit V4 des unteren Komponenten-Satellitenkopf-Aggregats 8a im Uhrzeigersinn ausgerichtet. Beide Drehgeschwindigkeiten können aufgrund der Unabhängigkeit der zugeordneten Antriebe voneinander abweichend eingestellt und geregelt werden. Dies gilt auch für die Fördergeschwindigkeiten V1 des Zuführ-Förderbandes 1 und V2 des Komponenten-Förderbandes 6. Ist der Betrag der Fördergeschwindigkeit V2 des Komponenten-Förderbandes 6 geringer als der Betrag bzw. die Umlauf bahngeschwindigkeit V4 des Drehgestells 10 des unteren Satellitenkopf-Aggregats 8a, werden dessen Satellitenwalzen 9 aufgrund ihres Abrollens an der Innenseite des Förderbandes 6 eine Eigen-Drehgeschwindigkeit V5 erteilt, die der Differenz V2 minus V4 entspricht. Die Eigen-Drehgeschwindigkeit V5 der Satellitenwalze 9 des unteren Satellitenkopf-Aggregats 8a ist dann der Drehgeschwindigkeit V4 von dessen Drehgestell 10 und gemäß gezeichnetem Beispiel dem Uhrzeigersinn entgegengerichtet.

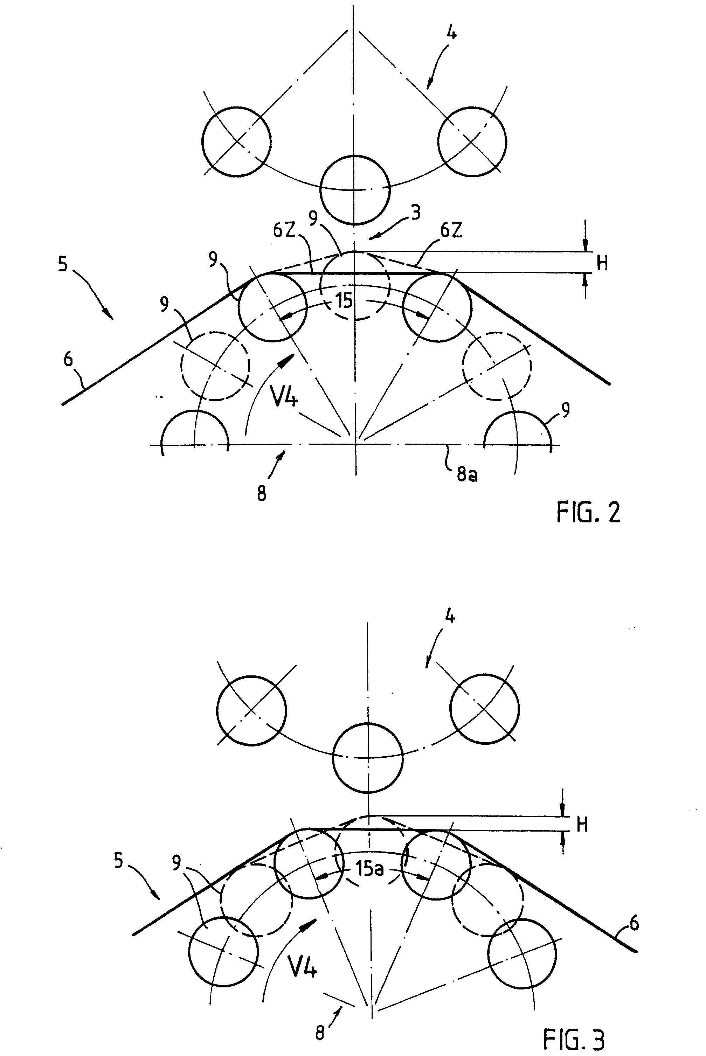

Gemäß Fig.2 wird dem Komponenten-Förderband 6 durch das Stellorgan 8 im Bereich des Teigformspalts 3 3 eine periodische Auslenkung mit bestimmter Frequenz und einer Hub-Amplitude H erteilt, die zur periodischen Verengung bzw. Erweiterung des Teigformspalts 3 führt. Hierdurch kann je nach innerer Struktur und Art des Teiges in diesem ein Thixotropieeffekt beispielsweise ausgelöst oder eine sonstige, schonende Teigbehandlung mit hoher Effizienz und hohem Teigdurchsatz bewirkt werden. Der Zustand, in dem die Auslenkung des Komponenten-Förderbandes 6 mit der Hub-Amplitude H zur maximalen Verengung des Teigformspalts 3 führt, ist punktiert gezeichnet, wohingegen der Zustand maximaler Breite des Teigformspaltes 3 ausgezogen dargestellt ist. Indem die Satellitenwalzen 9 des unteren Satellitenkopf-Aggregats 8a als Stellorgan 8 für die Teigverarbeitungskomponente 5 entlang ihrer Umlaufbahn mit der Geschwindigkeit V4 bei konstantem Umlauf-Radius geführt werden, rollen sie auf der Innenseite des Komponenten-Förderbandes 6 ab und heben dieses kurzzeitig im Bereich des Teigformspaltes 3 an, wodurch dieser verengt wird. Hat die jeweilige Satellitenwalze 9 des unteren Satellitenkopf-Aggregats 8a den Bereich des Teigformspaltes 3 passiert, verstreicht aufgrund ihres Umfangsabstandes 15 zur nachfolgenden Satellitenwalze 9 einige Zeit, in welcher sich das vorher im Teigformspalt 3 elastisch angehobene Komponenten-Förderband 6 wieder im Sinne einer Verbreiterung des Spalts 3 reversibel zurückbewegen kann. Sobald die nachfolgende Satellitenwalze 9 sich voll im Zentrum des Teigformspaltes 3 befindet, ist das Komponenten-Förderband 6 mit der Hub-Amplitude H wieder im Sinne einer maximalen Verengung des Teigformspaltes 3 ausgelenkt. Erkennbar ist ferner, daß Zwischenabschnitte 6z des Förderban des 6 zwischen einzelnen Satellitenwalzen 9 aufgrund der von ihnen erzeugten Längsspannung geradlinig verlaufen, so daß im Bereich des Teigformspaltes 3 beim Förderband 12 ein angenähert polygonal gekrümmter Verlauf (punktiert gezeichnet) mit einem zeitweise geradlinigen Verlauf (ausgezogen gezeichnet) abwechselt.

Ein Vergleich der Fig.3 mit Fig.2 zeigt, daß bei einem geringeren Umfangsabstand 15a zwischen den unteren Satellitenwalzen 9 sich der Betrag der Hub-Amplitude H und damit das Ausmaß der maximalen Verengung des Teigformspaltes 3 vermindert. Gleichzeitig erhöht sich die Frequenz der Auslenkung des Komponenten-Förderbandes 6 bei konstant gehaltener Umlaufgeschwindigkeit V4.

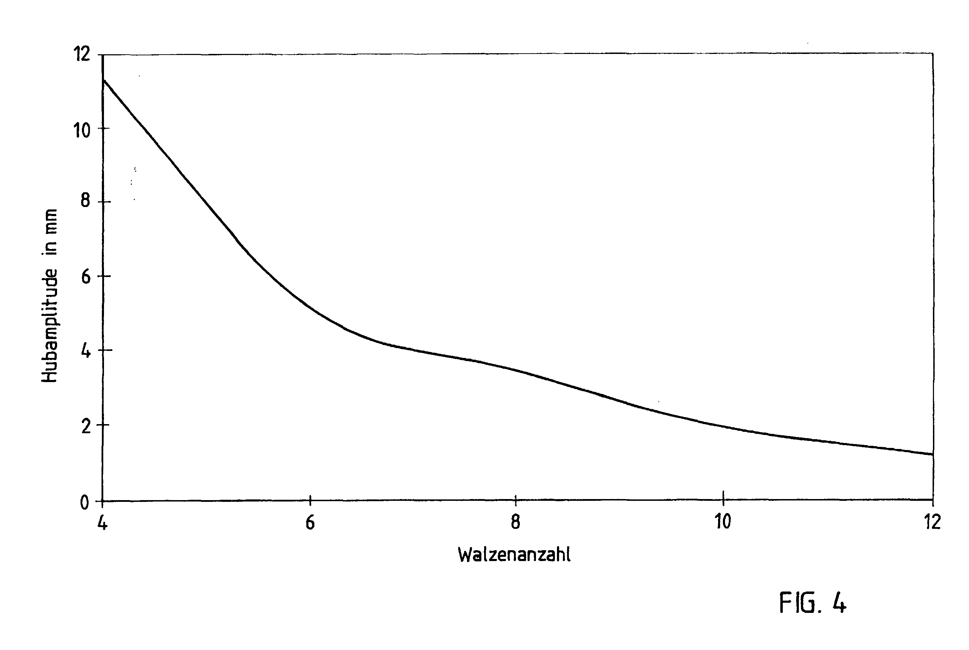

Das Diagramm in Fig.4 zeigt, wie sich mit zunehmender Walzenanzahl im Komponenten-Satellitenkopf-Aggregat 8a die Hub-Amplitude H und damit die Höhe der Pulsation des Komponenten-Förderbandes 6 vermindert. Dabei ist stets von konstantem Durchmesser der Satellitenwalzen 9 ausgegangen.

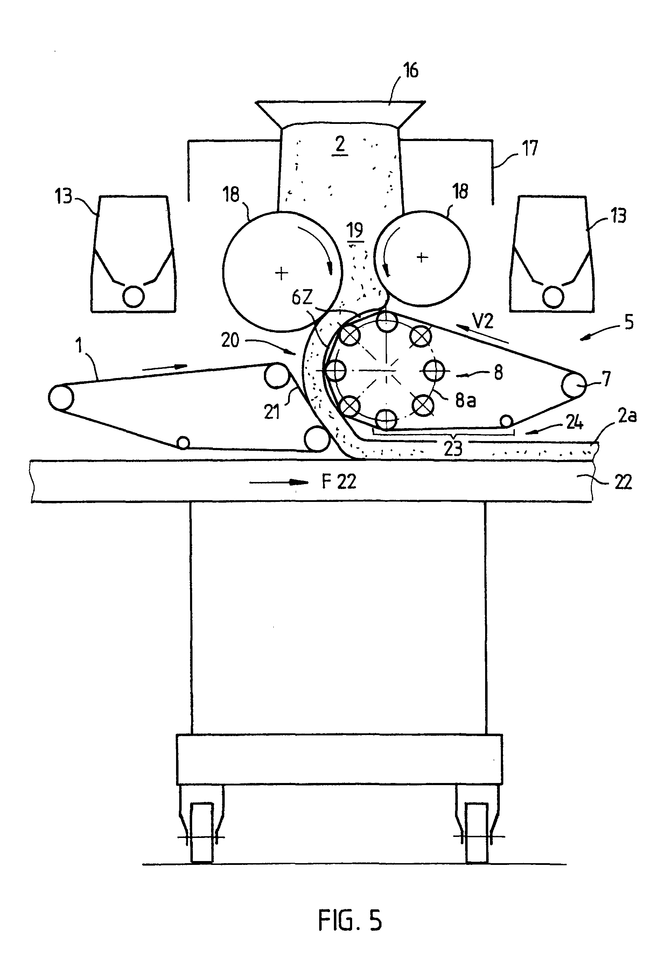

In Fig. 5 ist ein Teigbandformer für weiche Teige unter Einsatz einer erfindungsgemäßen Teigverarbeitungs-Maschinenkomponente 5 veranschaulicht, welche ebenfalls ein Satellitenkopf-Aggregat 8a als Stellorgan 8 analog der obigen Beschreibung umfaßt. Ein Teig-Aufgabetrichter 16 ist in einem Maschinenchassis 17 oberhalb zweier horizontal einander gegenüberliegender Walzen 18 angeordnet, welche zwischen sich einen Spalt zur Bildung des Eingangs 19 in einen gekrümmt oder polygonal verlaufenden Teigformkanal 20 bilden. Dessen weiterer Verlauf unmittelbar nach dem Eingang 19 wird mit Hilfe der Teigverarbeitungs- Maschinenkomponente 5 gemäß Erfindung definiert, indem diese einem der beiden Trichter-Walzen 18 schräg gegenüber liegt. Ferner liegt die Komponente 5 einem Zuführ-Förderband 1 gegenüber, das unmittelbar unterhalb der zuletzt angesprochenen Trichter-Walze 18 sowie einer Mehleinstreueinrichtung 13 angeordnet ist und dabei mit einem Schrägförderabschnitt 21 gegenüber der Komponente 5 den weiteren Verlauf des Teigformkanals 20 definiert und begrenzt. Unterhalb des Zuführ-Förderbandes 1 und der Komponente 5 erstreckt sich ein Wegführ-Förderband 22, dessen Förderrichtung F22 sich mit der Richtung der Geschwindigkeit V2 des Komponenten-Förderbandes 6 deckt bzw. dieser entspricht. Das Wegführ-Förderband 22 bildet zusammen mit dem gegenüberliegenden, unteren, horizontalen Abschnitt 23 des Komponenten-Förderbandes 6, welcher Abschnitt 23 sich horizontal zwischen dem Stellorgan 8 und einer nächstliegenden Umlenkrolle 7a erstreckt, den Ausgangsbereich 24 des Teigformkanals 20, woraus der fertig geformte Teigstrang 2a zur Weiterverarbeitung auf dem Wegführ-Förderband 22 zur Verfügung steht. Die Pulsation, die die erfindungsgemäße Komponente 5 im Zusammenhang mit dem Stellorgan 8 bzw. dem Satellitenkopf-Aggregat 8a auf den Teig-formkanal 20 zu dessen periodischer Verengung bzw. Erweiterung ausübt, ist der oben beschriebenen Pulsationswirkung analog. Dies gilt auch für die nachfolgend beschriebenen weiteren Anordnungen mit erfindungsgemäßer Teigverarbeitungs-Maschinenkomponente.

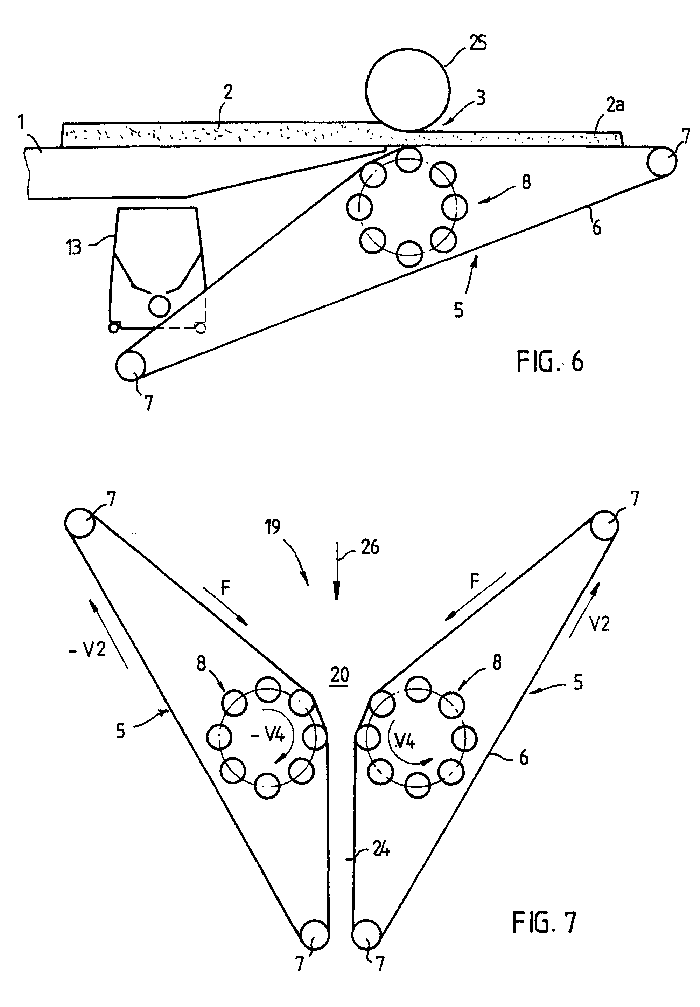

Die Anordnung gemäß Figur 6 unterscheidet sich von der nach Figur 1 zum einen dadurch, daß das Komponenten-Förderband 6 entsprechend der Grundform eines stumpfwinkligen Dreiecks mittels der Umlenk-/Antriebsrollen 7 um das Stellorgan 8 geführt ist. Dieses bildet den stumpfwinkligen Eckbereich und liegt zur Bildung des Teigformspaltes 3 einer Kalibrierwalze 25 unmittelbar gegenüber. Diese Anordnung eignet sich als Kalibrierkopf.

Gemäß Figur 7 läßt sich aus zwei einander gegenüberliegend angeordneten erfindungsgemäßen Teigverarbeitungs-Maschinenkomponenten 5 ein Teigband-Vorformer bilden. Beide Komponenten 5 besitzen übereinstimmend die Grundform eines stumpfwinkligen Dreiecks entsprechend der in Figur 6 eingesetzten Komponente. Die beiden Komponenten liegen einander mit der vom Stellorgan 8 jeweils gebildeten stumpfwinkligen Ecke gegenüber. In Förderrichtung F der Komponenten-Förderbänder 6 gesehen, schließen sich an die stumpfwinkligen Stellorgan-Ecken zueinander parallel verlaufende Förderbandabschnitte an, die den schmäleren, verengten Ausgangsbereich 24 des Teigformkanals 20 bilden. Der Eingangsbereich 19 wird durch je einen Abschnitt der Förderbänder 6 beider Komponenten 5 begrenzt, die in Förderrichtung F gesehen der stumpfwinkligen, vom Stellorgan 8 gebildeten Ecke vorausgehen. Da die beiden vorgenannten, den Ausgangsbereich 24 begrenzenden Abschnitte zueinander parallel verlaufen, verlaufen die beiden jeweils vorausgehenden Abschnitte zueinander schräg und in Förderrichtung F aufeinander zu bzw. konvergieren. Dabei erhält der Eingangsabschnitt 19 des Teigformkanals 20 eine sich in Teig-Bewegungsrichtung 26 keilförmig verjüngende, trichterartige Grundform. Die Drehgeschwindigkeiten V4 der im Beispiel als Satellitenkopf-Aggregate ausgebildeten Stellorgane 8 entsprechen in ihrem Richtungssinn der Förderrichtung F bzw. der Förderbahngeschwindigkeiten V2 der Komponenten-Förderbänder 6, so daß dem Teig die Durchfluß-Bewegung 26 vom breiteren Eingangsabschnitt 19 in Richtung zum engeren Ausgangsabschnitt 24 mit parallel begrenzten Seiten erteilt wird.

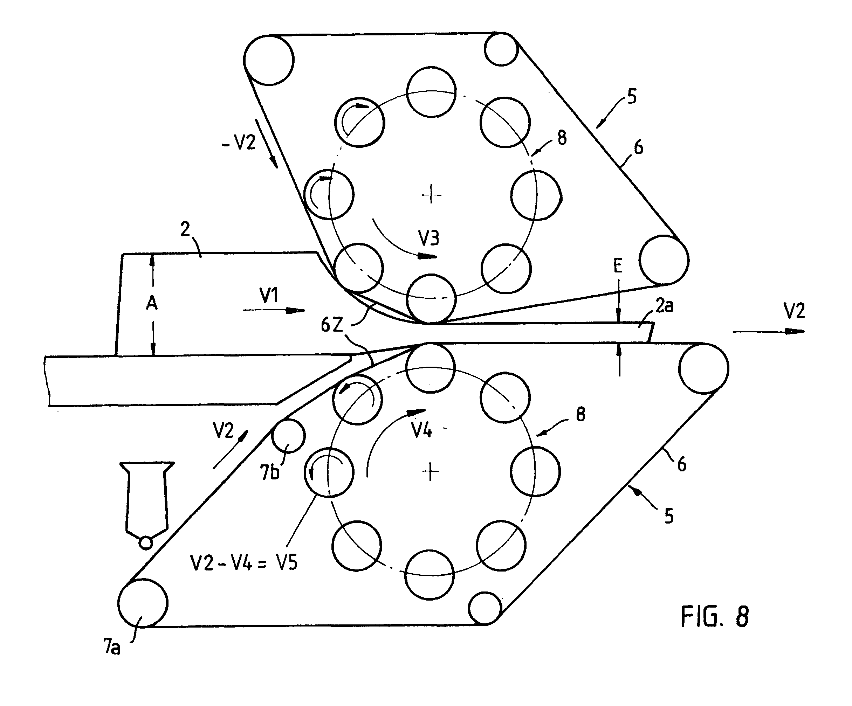

Gemäß Figur 8 ist eine Teigverarbeitungs-Anordnung gebildet, bei der ebenfalls zwei erfindungsgemäße Maschinenkomponenten 5 mit ihren beispielsweise stumpfwinkligen Ecken einander gegenüberliegen, in denen jeweils ein Stellorgan 8 das Komponenten-Förderband 6 von innen umlenkt. Die Anordnung unterscheidet sich von der nach Figur 1 dadurch, daß auch das obere Formwiderlager als erfindungsgemäße Maschinenkomponente 5 ausgebildet ist. Die obere Komponente 5 besitzt wie die untere in der Seitenansicht die Grundstruktur eines Parallelogramms, wobei aber die sich durch die spitzen, gegenüberliegenden Winkel erstreckende Diagonale bei der oberen Komponente kürzer als bei der unteren dimensioniert ist. Die Fördergeschwindigkeit - V2 des Förderbandes 6 der oberen Komponente 5 kann betragsmäßig mit der des Förderbandes der unteren Komponente übereinstimmen, muß aber in ihrem Richtungssinn der der unteren entgegengesetzt sein.

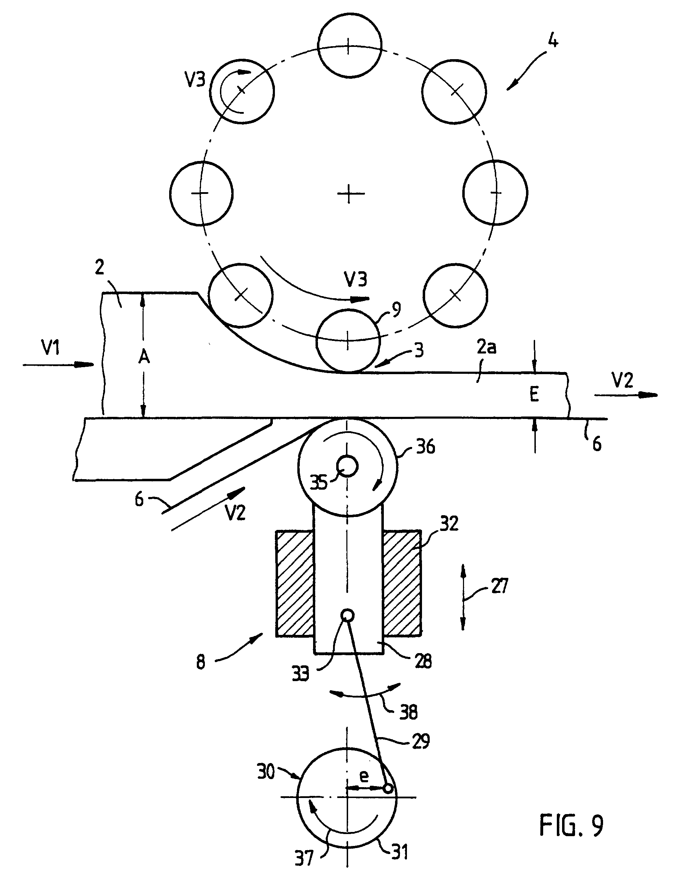

Die Anordnung nach Fig. 9 unterscheidet sich von der nach Fig 1 dadurch, daß bei der unterhalb des Förderbandes 6 angeordneten Teigverarbeitungs-Maschinenkomponente das Stellorgan 8 mit einem in linearen Hin- und Herbe wegungen 27 versetzbaren Hubbolzen 28 realisiert ist. Dieser ist über eine an ihren beiden Enden angelenkte Kurbelstange 29 mit einem Stellantrieb 30 gekoppelt, der eine Drehantriebsscheibe 31 aufweist. Daran ist die Kurbelstange 29 über die Exentrizität e radial versetzt angelenkt. Am anderen Ende ist die Kurbelstange 29 an dem als ausschließlich linear geführtes Schubglied dienenden Hubbolzen 28 angelenkt. Der Verlauf seiner Linear-Führung 32 deckt sich mit seinen Hin- und Herbewegungen 27. An dem der Anlenkstelle 33 der Kurbelstange 29 abgewandten Ende greift der Hubbolzen 28 an einer Drehachse 35 eines auf dem Hubbolzen 28 drehbar gelagerten Wälzkörpers 36 an. Dieser ist vorzugsweise freilaufend gelagert, so daß er von dem sich mit der Geschwindigkeit V2 bewegenden Komponenten-Förderband 6 über Rollreibung im gleichen Richtungssinn mitgedreht wird. Aufgrund der Drehung 37 der Antriebsscheibe 31 wird die Kurbelstange 29 in Schwenkbewegungen 38 versetzt, die von der Anlenkstelle 33 aufgenommen werden. Aufgrunddessen vollführt der Hubbolzen 28 je nach Ausmaß der Exzentrizität e Hin- und Her- bzw. Hubbewegungen 27. Die Exzentrizität e bestimmt also die Amplitude der Hubbewegungen 27 und damit die der über den Wälzkörper 36 erzeugten Auslenkungen H (vgl. Fig. 2 und 3) des Komponenten-Förderbandes 6 in und aus den Teigformspalt 3, der vom Komponenten-Förderband 6 und der jeweils untersten Satellitenwalze 9 des oben gegenüberliegend angeordneten Satellitenkopf-Aggregates 4 als Formwiderlager gebildet ist. Die Frequenz der Vibrationen bzw. Pulsationen auf das Komponenten-Förderband 6 und den Teig 2 im Teigformspalt 3 wird von der Drehzahl der Antriebsscheibe 31 bestimmt. Der auf die Enddicke E abgewalzte Teigstrang 2a läßt sich dann durch das Komponenten-Förderband 6 zur weiteren Behandlung fortschaffen, wobei in vorteilhafter Weise vermieden ist, daß der abgewalzte Teig 2a aus dem Teigformspalt auf einen niedriger gelegenen Bearbeitungstisch fallen muß.

Die Erfindung ist nicht auf die Ausführung mit Walzkörper 36 oder Satellitenwalzen 9 beschränkt: An deren Stelle können auch unverdrehbar auf einem Dreh- oder Hubgestell fixierte Gleitkörper Anwendung finden, an die dann das Förderband mit seiner Unter- oder Oberseite vorbeigezogen wird.

### Bezugszeichenliste

- 1: Zuführ-Förderband
- 2, 2a: Teigstrang
- 3: Teigformspalt
- 4: Satelliten-Aggregat
- 5: Teigverarbeitungs-Komponente
- 6: Förderband
- 6z: Zwischenabschnitte
- 7: Antriebs- und/oder Umlenkrollen
- 7a: Umlenkrolle
- 7b: Stabilisierungswalze
- 8: Stellorgan
- 8a: Satellitenkopf-Aggregat
- 9: Satellitenwalze
- 10: Drehgestell
- 11: Abstand
- 12: Förderrampe, Förderband
- 13: Mehlstreueinrichtung
- 14: Abstand
- 15: Umfangsabstand
- 15a: Umfangsabstand
- 16: Teigaufgabe-Trichter
- 17: Maschinenchassis
- 18: Walze, Trichter-Walze
- 19: Eingang
- 20: Teigformkanal
- 21: Schrägförderabschnitt
- 22: Wegführ-Förderband
- 23: Abschnitt
- 24: Ausgangsbereich
- 25: Formwiderlager
- 26: Teig-Bewegungsrichtung
- 27: Hin- und Herbewegungen
- 28: Hubbolzen
- 29: Kurbelstange
- 30: Stellantrieb
- 31: Drehantriebsscheibe
- 32: Linear-Führung
- 33: Anlenkstelle
- 35: Drehachse
- 36: Wälzkörper
- 37: Drehung
- 38: Schwenkbewegung

## Patentansprüche

1. Verfahren zur maschinellen Teigverarbeitung, insbesondere zum Formen von Teig, mit einem den Teig erfassenden oder darauf einwirkenden Bandförderer, der an wenigstens einem Formwiderlager zur Bildung eines Formspalts (3) oder Formkanals (20) für den Teig (2,2a) vorbeigeführt wird, **dadurch gekennzeichnet, daß** für den Bandförderer ein flexibel und reversibel auslenkbares Förderband (6) verwendet wird, und das Förderband (6) im Bereich des Formspalts (3) oder Formkanals (20) mit einem Stellorgan (8) in Richtungen quer und/oder schräg zur Förderrichtung (F) kurzzeitig und/oder periodisch ausgelenkt und die Auslenkung wieder umgekehrt wird.

2. Verfahren nach Anspruch 1, **dadurch gekennzeichnet, daß** die Periode und/oder Amplitude (H) der Auslenkung so gewählt wird, daß im Teig (2,2a) ein Thixotropieeffekt entsteht.

3. Verfahren nach Anspruch 1 oder 2, **dadurch gekennzeichnet, daß** als Stell-organ (8) wenigstens ein Wälz- oder Gleitkörper (9,36) verwendet und in Anlage an das Förderband (6) gehalten und dabei entsprechend der Auslenkung des Förderbands (6) wiederholt, gegebenenfalls reversierend, vorbeibewegt und/oder hin- und herverstellt wird.

4. Verfahren nach Anspruch 1, 2 oder 3, **dadurch gekennzeichnet, daß** als Stellorgan (8) ein Satellitenkopf-Aggregat (8a) verwendet wird, das auf seinem Außenumfang wenigstens einen nichtlinear oder zumindest zeitweise polygon verlaufenden Abschnitt (6z) aufweist und mit diesem gegen das Förderband (6) gedrückt wird.

5. Verfahren nach Anspruch 4, **dadurch gekennzeichnet, daß** die Periode und/oder Amplitude (H) der Auslenkung über die Anzahl der Satellitenwalzen (9) des Aggregats, deren Abstände im Aggregat voneinander, der Satellitenbahngeschwindigkeit (V4) und/oder der Durchmesser der Satellitenwalzen eingestellt wird.

6. Komponente für Teigverarbeitungsmaschinen, insbesondere Teigbandformer, als Mittel zur Durchführung des Verfahrens nach einem der vorangehenden Ansprüche, mit einem den Teig (2,2a) erfassenden oder darauf einwirkenden Bandförderer, **dadurch gekennzeichnet, daß** der Bandförderer ein flexibel und reversibel auslenkbares Förderband (6) aufweist, mit dem ein Stellorgan (8) verbunden oder gekoppelt ist, das dazu ausgebildet ist, dem Förderband (6) kurzzeitige und/oder periodische Auslenkbewegungen in Richtungen quer und/oder schräg zur Förderrichtung (F) zu erteilen und diese umzukehren.

7. Komponente nach Anspruch 6, **dadurch gekennzeichnet, daß** das Stellorgan (8) innerhalb des vom Förderband (6) umgrenzten Bereichs angeordnet ist.

8. Komponente nach einem der vorangehenden Ansprüche, **dadurch gekennzeichnet, daß** das Förderband (6) wenigstens einen nichtlinear verlaufenden Abschnitt aufweist, mit dem es in Wirkungsverbindung mit dem im Verfahren verwendeten Formspalt (3) oder Formkanal (20) und/oder Teig (2,2a) setzbar ist.

9. Komponente nach Anspruch 6, 7 oder 8, **dadurch gekennzeichnet, daß** das Stellorgan (8) ein oder mehrere Gleit- und/oder Wälzkörper (9,36) aufweist, die mittels eines beweglichen Gestells (10;28,29) in Anlage an das Förderband (6) gehalten sind, und das Gestell (10;28,29) mit einem Stellantrieb (30) zur Erteilung von Auslenkbewegungen über die Gleit- und/oder Wälzkörper (9,36) an das Förderband (6) gekoppelt ist.

10. Komponente nach Anspruch 9, **dadurch gekennzeichnet, daß** die Wälzkörper (9,36) im oder am Gestell (10;28,29) freilaufend gelagert und zum Abrollen auf dem Förderband (6) angeordnet sind.

11. Komponente nach Anspruch 9 oder 10, **dadurch gekennzeichnet, daß** die Gleit- und/oder Wälzkörper (9,36) nach Art eines Satellitenkopf-Aggregats (8a) auf dem Gestell (10) angeordnet sind, das vom Stellantrieb zur Herbeiführung satellitenartiger Umlaufbahnen für die Gleit- und/oder Wälzkörper (9) angetrieben ist.

12. Komponente nach Anspruch 9 oder 10, **dadurch gekennzeichnet, daß** das Gestell einen vom Stellantrieb über eine Linear-Führung (32) in lineare Hin- und Herbewegungen (27) versetzbaren Hubbolzen (28) umfaßt, der an seinem freien Ende den Gleit und/oder Wälzkörper (36) zur Anlage an das Förderband (6) trägt.

13. Komponente nach einem der vorangehenden Ansprüche, **dadurch gekennzeichnet, daß** das Förderband (6) mehrfach umgelenkt beziehungsweise mehreckig verlaufend aufgespannt ist, wobei wenigstens ein Eckbereich von einer Antriebs- und/oder Umlenktrommel (7) des Bandförderers und wenigstens ein anderer Eckbereich vom Stellorgan (8) gebildet ist.

14. Komponente nach Anspruch 13, **dadurch gekennzeichnet, daß** der Verlauf des Förderbands (8) dem eines stumpfwinkligen Dreiecks oder eines Parallelogramms entspricht.

15. Komponente nach Ansprüche 11 und 13 oder 14, **dadurch gekennzeichnet, daß** die Antriebstrommel (7) und der Stellantrieb derart eingestellt oder einstellbar sind, daß die Förderrichtung (V2) des Bandförderers und die Umlaufbahnen (V4) der Satelliten-Wälzkörper (9) im gleichen Richtungs- oder Drehsinn verlaufen.

16. Komponente nach Anspruch 15, **dadurch gekennzeichnet, daß** die Antriebstrommel (7) und der Stellantrieb derart eingestellt oder einstellbar sind, daß die Fördergeschwindigkeit (V2) des Bandförderers geringer als die Umlaufbahngeschwindigkeit (V4) der Satelliten-Wälzkörper (9) ist.

17. Komponente nach einem der Ansprüche 13 bis 16, **dadurch gekennzeichnet, daß** die oder wenigstens eine der Antriebs- und/oder Umlenktrommeln (7) vom Stellorgan (8) in einem solchen Abstand angeordnet sind, daß beim Förderband ein quer oder schräg zur Förderrichtung verlaufender Abschnitt (12) gebildet ist.

18. Komponente nach Anspruch 17, **dadurch gekennzeichnet, daß** dieser Abschnitt (12) mit Ruhigstellmitteln (7b) verbunden oder gebildet ist, so daß er vom Stellorgan nicht spürbar auslenkbar oder ausgelenkt ist.

19. Anordnung mit wenigstens einer Teigverarbeitungs-Komponente (5) nach einem der vorangehenden Ansprüche, **dadurch gekennzeichnet, daß** die Komponente (5) einem oder mehreren Formwiderlagern zur Bildung eines oder mehrerer Formspalte (3) oder Formkanäle (20) für den Teig (2,2a) gegenüberliegend angeordnet ist.

20. Anordnung nach Anspruch 19, **dadurch gekennzeichnet, daß** die Komponente (5) mit einer Mehlstreueinrichtung (13) in Wirkungsverbindung steht.

21. Anordnung nach Anspruch 20 mit einer Teigverarbeitungskomponente (5;Fig.1) nach Anspruch 18, **dadurch gekennzeichnet, daß** die Mehlstreueinrichtung (13) dem nicht ausgelenkten oder auslenkbaren Abschnitt (12) des Förderbandes (6) zugeordnet und/oder gegenüberliegend angeordnet ist.

22. Anordnung nach Anspruch 21, **dadurch gekennzeichnet, daß** der Formspalt (3) oder Formkanal (20) horizontal verlaufend, und/oder der der Mehlstreueinrichtung (13) gegenüberliegende Abschnitt (12) schräg zum Formspalt (3) oder Formkanal (20), vorzugsweise ansteigend, ausgebildet ist.

23. Anordnung nach einem der vorangehenden Ansprüche, **dadurch gekennzeichnet, daß** das oder die Formwiderlager mit wenigstens einer Walze (25) insbesondere zum Kalibrieren und/oder mit wenigstens einem Satellitenkopf-Aggregat (4) und/oder mit wenigstens einer weiteren Teigverarbeitungs-Komponente (5) ausgebildet sind.

24. Anordnung nach einem der vorangehenden Ansprüche, **gekennzeichnet durch** ein Zuführ- und/oder Wegführ-Förderband (1,22) am Eingang (19) beziehungsweise Ausgang (24) wenigstens eines aus der Teigverarbeitungs-Komponente (5) und dem Formwiderlager (25,4,5) gebildeten Formspalts (3) oder Formkanals (20).

25. Anordnung nach Anspruch 23 oder 24, **dadurch gekennzeichnet, daß** daß die Walze (9,36), das Satellitenkopf-Aggregat (4,8a), das Förderband (6) und das Stellorgan (8) der Teigverarbeitungs-Komponente (5) und/oder die etwaigen Zuführ- und/oder Wegführ-Förderbänder (1,22) mit Antriebsmitteln (31) derart versehen sind, daß ihre jeweiligen Geschwindigkeiten (V1,V2,V3,V4V5) unabhängig voneinander einstellbar oder regelbar sind.

26. Anordnung nach einem der vorangehenden Ansprüche, **dadurch gekennzeichnet, daß** mehrere Formwiderlager (18,1,22) derart um die Teigverarbeitungs-Komponente (5) plaziert sind, daß ein gekrümmter, gebogener oder polygoner Teig-Formkanal (19,20,24) begrenzt wird.

27. Anordnung nach Anspruch 26, **dadurch gekennzeichnet, daß** zwei (18) der Formwiderlager (18,1,22) einander gegenüberliegend oberhalb der Komponente (5), und ein weiteres Formwiderlager (1;Fig.5) unmittelbar unterhalb eines der beiden vorgenannten Formwiderlager (18) angeordnet sind.

28. Anordnung nach Anspruch 27, **dadurch gekennzeichnet, daß** unmittelbar unterhalb des weiteren Formwiderlagers (1) und der Komponente (5) ein unteres Formwiderlager vorzugsweise in Form eines Wegführ-Förderbandes (22) angeordnet ist.

29. Anordnung nach einem der vorangehenden Ansprüche, **dadurch gekennzeichnet, daß** von dem einen oder den mehreren Formwiderlagern (18,1,22) wenigstens eines auch als Teigverarbeitungs-Komponente (5) ausgebildet ist.

30. Anordnung nach Anspruch 29, mit zwei einander gegenüberliegend angeordneten Teigverarbeitungs-Komponenten (5;Fig.8) jeweils nach Anspruch 13 oder 14, **dadurch gekennzeichnet, daß** die Komponenten (5) einander spiegelsymmetrisch und/oder mit der jeweils vom Stellorgan (8) gebildeten Ecke gegenüberliegen.

31. Anordnung nach Anspruch 30, **gekennzeichnet durch** eine trichterartige Grundform, bei der die Komponenten (5) jeweils Förderbänder (6) mit stumpfwinklig-dreieckigen Verläufen (Fig.7) aufweisen und einander mit je einer Dreieckseite parallel gegenüberliegen, und die jeweils stumpfwinklige Ecke von den gegenüberliegenden Stellorganen (8) der Förderbänder (6) gebildet ist.

## Claims

1. Method for mechanically processing dough, in particular for shaping dough, with a belt conveyor which takes up or acts on the dough and is led past at least one shaping abutment to form a shaping gap (3) or shaping channel (20) for the dough (2, 2a), **characterised in that** a conveyor belt (6) which can be flexibly and reversibly deflected is used for the belt conveyor, and the conveyor belt (6) is deflected briefly and/or periodically in directions transversely and/or obliquely to the conveying direction (F) in the region of the shaping gap (3) or shaping channel (20) by an actuating member (8) and the deflection is reversed again.

2. Method according to Claim 1, **characterised in that** the period and/or amplitude (H) of the deflection is selected such that a thixotropic effect is produced in the dough (2, 2a).

3. Method according to Claim 1 or 2, **characterised in that** at least one rolling or sliding body (9, 36) is used as actuating member (8) and held in contact with the conveyor belt (6) and at the same time repeatedly, optionally reversibly, moved past and/or reciprocated according to the deflection of the conveyor belt (6).

4. Method according to Claim 1, 2, or 3, **characterised in that** a satellite head unit (8a) is used as actuating member (8), which unit comprises at its outer circumference at least one portion (6z) extending in nonlinear or at least occasionally polygonal fashion and is pressed by way of this portion against the conveyor belt (6).

5. Method according to Claim 4, **characterised in that** the period and/or amplitude (H) of the deflection is adjusted via the number of satellite rollers (9) of the unit, their distances from one another in the unit, the satellite path velocity (V4) and/or the diameter of the satellite rollers.

6. Component for dough processing machines, in particular dough belt shaper, as means for carrying out the method according to any one of the preceding Claims, with a belt conveyor which takes up or acts on the dough (2, 2a), **characterised in that** the belt conveyor comprises a conveyor belt (6) which can be flexibly and reversibly deflected and to which an actuating member (8) is connected or coupled, which member is formed to impart brief and/or periodic deflection movements to the conveyor belt (6) in directions transversely and/or obliquely to the conveying direction (F) and reverse these movements.

7. Component according to Claim 6, **characterised in that** the actuating member (8) is arranged inside the region bounded by the conveyor belt (6).

8. Component according to any one of the preceding Claims, **characterised in that** the conveyor belt (6) comprises at least one portion which extends in nonlinear fashion and ny way of which it can be operatively connected to the shaping gap (3) or shaping channel (20) and/or dough (2, 2a) used in the method.

9. Component according to Claim 6, 7 or 8, **characterised in that** the actuating member (8) comprises one or more sliding and/or rolling body/bodies (9, 36) which is/are held in contact with the conveyor belt (6) by means of a mobile frame (10; 28, 29), and the frame (10; 28, 29) is coupled to an actuating drive (30) to impart deflection movements to the conveyor belt (6) via the sliding and/or rolling bodies (9, 36).

10. Component according to Claim 9, **characterised in that** the rolling bodies (9, 36) are mounted in free-running fashion in or on the frame (10; 28, 29) and arranged to roll on the conveyor belt (6).

11. Component according to Claim 9 or 10, **characterised in that** the sliding and/or rolling bodies (9, 36) are arranged like a satellite head unit (8a) on the frame (10), which is driven by the actuating drive to induce satellite-like orbits for the sliding and/or rolling bodies (9).

12. Component according to Claim 9 or 10, **characterised in that** the frame comprises a lifting pin (28) to which linear reciprocating movements (27) can be imparted via a linear guide (32) and which bears at its free end the sliding and/or rolling bodies (36) for contacting the conveyor belt (6).

13. Component according to any one of the preceding Claims, **characterised in that** the conveyor belt (6) is mounted so as to extend with multiple deflections or in polygonal fashion, wherein at least one corner region is formed by a drive and/or idler pulley (7) of the belt conveyor and at least one other corner region by the actuating member (8).

14. Component according to Claim 13, **characterised in that** the path of the conveyor belt (8) corresponds to that of an obtuse-angled triangle or of a parallelogram.

15. Component according to Claims 11 and 13 or 14, **characterised in that** the drive pulley (7) and the actuating drive are adjusted or adjustable such that the conveying direction (V2) of the belt conveyor and the orbits (V4) of the satellite rolling bodies (9) extend in the same directional or rotational sense.

16. Component according to Claim 15, **characterised in that** the drive pulley (7) and the actuating drive are adjusted or adjustable such that the conveying velocity (V2) of the belt conveyor is lower than the orbital velocity (V4) of the satellite rolling bodies (9).

17. Component according to any one of Claims 13 to 16, **characterised in that** the or at least one of the drive and/or idler pulleys is/are arranged at a distance from the actuating drive (8) such that a portion (12) extending transversely or obliquely to the conveying direction is formed at the conveyor belt.

18. Component according to Claim 17, **characterised in that** this portion (12) is connected to or formed with stabilising means (7b), so that it is not perceptibly deflectable or deflected by the actuating member.

19. Arrangement with at least one dough processing component (5) according to any one of the preceding Claims, **characterised in that** the component (5) is arranged opposite one or more shaping abutment(s) for forming one or more shaping gap(s) (3) or shaping channel(s) (20) for the dough (2, 2a).

20. Arrangement according to Claim 19, **characterised in that** the component (5) is operatively connected to a flour scattering device (13).

21. Arrangement according to Claim 20 with a dough processing component (5; Figure 1) according to Claim 18, **characterised in that** the flour scattering device (13) is associated with and/or arranged opposite the non-deflected or non-deflectable portion (12) of the conveyor belt (6).

22. Arrangement according to Claim 21, **characterised in that** the shaping gap (3) or shaping channel (20) is formed so as to extend horizontally, and/or the portion (12) lying opposite the flour scattering device (13) is formed obliquely to the shaping gap (3) or shaping channel (20), preferably in ascending fashion.

23. Arrangement according to any one of the preceding Claims, **characterised in that** the shaping abutment or abutments is/are formed with at least one roller (25) in particular for calibrating and/or with at least one satellite head unit (4) and/or with at least one additional dough processing component (5).

24. Arrangement according to any one of the preceding Claims, **characterised by** a feed and/or removal conveyor belt (1, 22) at the entrance (19) and/or exit (24) at least of one shaping gap (3) or shaping channel (20) formed from the dough processing component (5) and the shaping abutment (25, 4, 5).

25. Arrangement according to Claim 23 or 24, **characterised in that** the roller (9, 36), the satellite head unit (4, 8a), the conveyor belt (6) and the actuating member (8) of the dough processing component (5) and/or any feed and/or removal conveyor belts (1, 22) are provided with drive means (31) such that their respective velocities (V1, V2, V3, V4, V5) can be adjusted or regulated independently of one another.

26. Arrangement according to any one of the preceding Claims, **characterised in that** a plurality of shaping abutments (18, 1, 22) are placed around the dough processing component (5) such that a curved, bent or polygonal dough shaping channel (19, 20, 24) is defined.

27. Arrangement according to Claim 26, **characterised in that** two (18) of the shaping abutments (18, 1, 22) are arranged opposite one another above the component (5), and an additional abutment (1; Figure 5) is arranged directly below one of the two above-mentioned shaping abutments (18).

28. Arrangement according to Claim 27, **characterised in that** a bottom abutment, preferably in the form of a removal conveyor belt (22), is arranged directly below the additional shaping abutment (1) and the component (5).

29. Arrangement according to any one of the preceding Claims, **characterised in that** at least one of the one or plurality of shaping abutment(s) (18, 1, 22) is also formed as a dough processing component (5).

30. Arrangement according to Claim 29, with two dough processing components (5; Figure 8) arranged opposite one another, in each case according to Claim 13 or 14, **characterised in that** the components (5) lie opposite one another in axially symmetrical fashion and/or by way of the corner in each case formed by the actuating member (8).

31. Arrangement according to Claim 30, **characterised by** a funnel-like basic shape, in which the components (5) in each case comprise conveyor belts (6) with obtuse-angled triangular paths (Figure 7) and lie in parallel opposite one another by way of a respective triangle side, and the respective obtuse-angled corner is formed by the opposite actuating members (8) of the conveyor belts (6).

## Revendications

1. Procédé de traitement ou de transformation de pâte à la machine, notamment pour le moulage ou le façonnage de pâte, comprenant un transporteur à bande, qui saisit la pâte ou agit sur celle-ci, et que l'on fait passer au-devant d'au moins un appui conjugué de façonnage pour former un interstice de façonnage (3) ou un canal de façonnage (20) pour la pâte (2, 2a), **caractérisé en ce que** pour le transporteur à bande on utilise une bande de transport (6) flexible et pouvant être déviée de manière réversible, et **en ce que** la bande de transport (6), dans la zone de l'interstice de façonnage (3) ou du canal de façonnage (20), est déviée à l'aide d'un organe d'actionnement (8) de manière temporaire brève et/ou périodique, dans des directions transversale et/ou oblique par rapport à la direction de transport (F), la déviation étant ensuite inversée.

2. Procédé selon la revendication 1, **caractérisé en ce que** la période et/ou l'amplitude (H) de la déviation sont choisies de manière à ce qu'il se produise un effet de thixotropie dans la pâte (2, 2a).

3. Procédé selon la revendication 1 ou 2, **caractérisé en ce qu'**en guise d'organe d'actionnement (8) on utilise au moins un corps de roulement ou de glissement (9, 36) qui est maintenu en appui contre la bande de transport (6), et qui est ici déplacé au-devant et/ou déplacé en va-et-vient conformément à la déviation de la bande de transport (6), de manière répétée, le cas échéant de manière réversible.

4. Procédé selon la revendication 1, 2 ou 3, **caractérisé en ce que** qu'en guise d'organe d'actionnement (8) on utilise un ensemble de têtes satellites (8a) qui, sur sa périphérie extérieure, présente au moins un tronçon (6z) s'étendant de manière non linéaire ou polygonale au moins de manière temporaire, et est qui est appliqué ou pressé avec celui-ci contre la bande de transport (6).

5. Procédé selon la revendication 4, **caractérisé en ce que** la période et/ou l'amplitude (H) de la déviation peuvent être réglées par l'intermédiaire du nombre des rouleaux satellites (9) de l'ensemble, leur distance d'espacement réciproque dans l'ensemble, la vitesse de déplacement de la trajectoire orbitale des satellites (V4) et/ou le diamètre des rouleaux satellites.

6. Composant pour des machines de traitement de pâte, notamment des dispositifs de façonnage de bandes ou nappes de pâte, en tant que moyen destiné à la mise en oeuvre du procédé selon l'une des revendications précédentes, comprenant un transporteur à bande, qui saisit la pâte (2, 2a) ou agit sur celle-ci, **caractérisé en ce que** le transporteur à bande comprend une bande de transport (6) flexible et pouvant être déviée de manière réversible, avec laquelle est relié ou couplé un organe d'actionnement (8) qui est conçu pour conférer à la bande de transport (6) des mouvements de déviation temporaires brefs et/ou périodiques dans des directions transversale et/ou oblique par rapport à la direction de transport (F), et pour inverser ces mouvements.

7. Composant selon la revendication 6, **caractérisé en ce que** l'organe d'actionnement (8) est disposé à l'intérieur de la zone délimitée par la bande de transport (6) en révolution.

8. Composant selon l'une des revendications précédentes, **caractérisé en ce que** la bande de transport (6) présente au moins un tronçon ne s'étendant pas de manière linéaire, par lequel elle peut être amenée à interagir avec l'interstice de façonnage (3) ou le canal de façonnage (20) utilisé dans le cadre du procédé, et/ou la pâte (2, 2a).

9. Composant selon la revendication 6, 7 ou 8, **caractérisé en ce que** l'organe d'actionnement (8) présente un ou plusieurs corps de glissement et/ou de roulement (9, 36), qui, au moyen d'un châssis mobile (10 ; 28, 29), sont maintenus en appui contre la bande de transport (6), et le châssis (10 ; 28, 29) est couplé à un entraînement d'actionnement (30) destiné à conférer des mouvements de déviation à la bande de transport (6) par l'intermédiaire des corps de glissement et/ou de roulement (9, 36).

10. Composant selon la revendication 9, **caractérisé en ce que** les corps de roulement (9, 36) sont montés librement tournants ou fous dans ou sur le châssis (10 ; 28, 29), et sont disposés de manière à rouler sur la bande de transport (6).

11. Composant selon la revendication 9 ou 10, **caractérisé en ce que** les corps de glissement et/ou de roulement (9, 36) sont disposés à la manière d'un ensemble de têtes satellites (8a), sur le châssis (10), qui est entraîné par l'entraînement d'actionnement, en vue de produire des trajectoires de révolution du genre trajectoire de satellite, pour les corps de glissement et/ou de roulement (9).

12. Composant selon la revendication 9 ou 10, **caractérisé en ce que** le châssis comprend un tenon de levée (28), qui porte à son extrémité libre, le corps de glissement et/ou de roulement (36) destiné à venir en appui sur la bande de transport (6), et qui peut être entraîné selon des mouvements linéaires de va-et-vient (27) au moyen de l'entraînement d'actionnement, par l'intermédiaire d'un guidage linéaire (32).

13. Composant selon l'une des revendications précédentes, **caractérisé en ce que** la bande de transport (6) est montée tendue en subissant des renvois multiples et en présentant respectivement un tracé polygonal, au moins une zone de sommet (angulaire) étant formée par un tambour d'entraînement et/ou de renvoi (7) du transporteur à bande, et au moins une autre zone de sommet étant formée par l'organe d'actionnement (8).

14. Composant selon la revendication 13, **caractérisé en ce que** le tracé de la bande de transport (6) correspond à celui d'un triangle obtusangle ou à angle obtus ou d'un parallélogramme.

15. Composant selon les revendications 11 et 13 ou 14, **caractérisé en ce que** le tambour d'entraînement (7) et l'entraînement d'actionnement sont réglés ou réglables de façon telle, que la direction de transport (V2) du transporteur à bande et les trajectoires orbitales de révolution (V4) des corps de roulement satellites (9) s'étendent dans la même direction ou le même sens de rotation.

16. Composant selon la revendication 15, **caractérisé en ce que** le tambour d'entraînement (7) et l'entraînement d'actionnement sont réglés ou réglables de manière telle, que la vitesse de transport (V2) de la bande de transport soit inférieure à la vitesse de trajectoire orbitale de révolution des corps de roulement satellites (9).

17. Composant selon l'une des revendications 13 à 16, **caractérisé en ce que** le tambour d'entraînement et/ou de renvoi ou l'un au moins des tambours d'entraînement et/ou de renvoi (7) sont disposés à une distance d'espacement telle de l'organe d'actionnement (8), que sur la bande de transport soit formé un tronçon (12) s'étendant de manière transversale ou oblique par rapport à la direction de transport.

18. Composant selon la revendication 17, **caractérisé en ce que** ce que le tronçon (12) est relié à ou formé de moyens de tranquillisation (7b) de sorte qu'il n'est pas dévié ou ne peut pas être dévié de manière sensible par l'organe d'actionnement.

19. Agencement comportant au moins un composant de traitement de pâte (5) selon l'une des revendications précédentes, **caractérisé en ce que** le composant (5) est disposé en regard d'un ou de plusieurs appuis conjugués de façonnage pour former un ou plusieurs interstices de façonnage (3) ou canaux de façonnage (20) pour la pâte (2, 2a).

20. Agencement selon la revendication 19, **caractérisé en ce que** le composant (5) interagit avec un dispositif de saupoudrage de farine (13).

21. Agencement selon la revendication 20, comprenant un composant de traitement de pâte (5 ; figure 1) selon la revendication 18, **caractérisé en ce que** le dispositif de saupoudrage de farine (13) est associé au tronçon (12) de la bande de transport (6) non dévié ou ne pouvant être dévié, et/ou est disposé en regard de ce tronçon.

22. Agencement selon la revendication 21, **caractérisé en ce que** l'interstice de façonnage (3) ou le canal de façonnage (20) est réalisé de manière à s'étendre horizontalement, et/ou le tronçon (12) en regard du dispositif de saupoudrage de farine (13) est réalisé de manière à être incliné par rapport à l'interstice de façonnage (3) ou au canal de façonnage (20), de préférence de manière montante.

23. Agencement selon l'une des revendications précédentes, **caractérisé en ce que** le ou les appuis conjugués de façonnage sont réalisés avec au moins un rouleau (25) notamment destiné au calibrage, et/ou avec au moins un ensemble de têtes satellites (4), et/ou avec au moins un autre composant de traitement de pâte (5).

24. Agencement selon l'une des revendications précédentes, **caractérisé par** une bande de transport d'amenée et/ou d'évacuation (1, 22) à l'entrée (19) et respectivement à la sortie (24) d'un interstice de façonnage (3) ou d'un canal de façonnage (20) formé par le composant de traitement de pâte (5) et l'appui conjugué de façonnage (25, 4, 5).

25. Agencement selon la revendication 23 ou 24, **caractérisé en ce que** le rouleau (9, 36), l'ensemble à têtes satellites (4, 8a), la bande de transport (6) et l'organe d'actionnement (8) du composant de traitement de pâte (5), et/ou les éventuelles bandes de transport d'amenée et/ou d'évacuation (1, 22) sont dotés de moyens d'entraînement (31) de façon telle, que leurs vitesses respectives (V1, V2, V3, V4, V5) puissent être réglées ou régulées indépendamment les unes des autres.

26. Agencement selon l'une des revendications précédentes, **caractérisé en ce que** plusieurs appuis conjugués de façonnage (18, 1, 22) sont placés autour du composant de traitement de pâte (5) de manière à délimiter un canal de façonnage de pâte (19, 20, 24) courbe, incurvé ou polygonal.

27. Agencement selon la revendication 26, **caractérisé en ce que** deux (18) des appuis conjugués de façonnage (18, 1, 22) sont disposés en regard l'un de l'autre au-dessus du composant (5), et un autre appui conjugué de façonnage (1 ; figure 5) est disposé directement en-dessous de l'un des deux appuis conjugués de façonnage (18) précités.

28. Agencement selon la revendication 27, **caractérisé en ce que** directement sous ledit autre appui conjugué de façonnage (1) et le composant (5), est disposé un appui conjugué de façonnage inférieur, de préférence sous la forme d'une bande de transport d'évacuation (22).

29. Agencement selon l'une des revendications précédentes, **caractérisé en ce que** l'un au moins dudit ou desdits plusieurs appuis conjugués de façonnage (18, 1, 22), est également réalisé en tant que composant de traitement de pâte (5).

30. Agencement selon la revendication 29, comprenant deux composants de traitement de pâte (5 ; figure 8) disposés en regard l'un de l'autre, respectivement selon les revendications 13 ou 14, **caractérisé en ce que** les composants (5) sont disposés en regard l'un de l'autre de manière symétrique inverse et/ou sont opposés l'un à l'autre par leur sommet formé par l'organe d'actionnement (8).

31. Agencement selon la revendication 30, **caractérisé par** une forme de base en trémie, dans lequel les composants (5) comportent des bandes de transport (6) respectives à tracé en forme de triangle obtusangle (figure 7), et sont en regard l'un de l'autre de manière parallèle, chacun par l'un des côtés de son tracé en triangle, et le sommet d'angle obtus de chacun des composants étant formé par les organes d'actionnement (8) respectivement opposés des bandes de transport (6).
